Europäisches Patentamt

European Patent Office

Office européen des brevets

(11) Publication number: **0 267 512**
A1

# (12) EUROPEAN PATENT APPLICATION

(21) Application number: 87116077.6

(22) Date of filing: 02.11.87

(51) Int. Cl.4: **A01D 34/43** , A01D 34/50 , A01D 34/42

(30) Priority: 11.11.86 IT 4162486

(43) Date of publication of application:
18.05.88 Bulletin 88/20

(84) Designated Contracting States:
AT BE CH DE FR GB LI NL

(71) Applicant: SEKO S.p.A.
Via Gorizia 90
I-35010 Curtarolo (Padova)(IT)

(72) Inventor: Loppoli, Giuseppe
Via Regina Margherita 30
I-35010 Grantorto Padova(IT)
Inventor: Zago, Lino
Via Brenta
I-35010 Campo San Martino Padova(IT)

(74) Representative: Modiano, Guido et al
MODIANO, JOSIF, PISANTY & STAUB
Modiano & Associati Via Meravigli, 16
I-20123 Milan(IT)

(54) **Lawn-mower device.**

(57) The device, adapted to be applied to a medium or lightweight tractor, is composed of a framework (1) whereon, in the lower part, three rollers (6,17,26) are provided, respectively a first brush-like roller (6), arranged at the front of the device, a second roller (17) provided with cutting blades (20) and a third smooth roller (26) for levelling the ground. The first roller (6), driven to rotate in the same direction as the advancement of the tractor (5), raises and straightens the blades of grass (15) and lifts anything present on the lawn. The second roller (17) is driven to rotate in the opposite direction with respect to the direction of advancement of the device and cuts the grass conveying it into a recovery and collection box (23). The third roller (26) rotates freely and has the function of levelling any rises and sods of the ground.

Fig. 1

## LAWN-MOWER DEVICE

The present invention relates to a lawn-mower device. More in particular, the lawn-mower device according to the invention is adapted to mow grass lawns such as those of football or soccer fields, golf-courses and the like.

In order to perform this type of work, oscillating mowing machines or rotary-blade machines are currently used.

With the oscillating mowing machines, the cut grass remains on the ground and must be subsequently gathered by raking.

Rotary blades machines do not work properly when the grass has been stamped upon and the blades of grass are bent toward the ground.

The aim of the present invention is to provide a lawn-mower device which eliminates these disadvantages allowing a perfect mowing of a lawn.

A consequent important object is to provide a device which allows to cut also the grass even if the same is in non-optimum conditions, that is to say crushed and stamped upon grass.

Still another object is to provide a device which allows the complete gathering both of the cut grass and of any impurities present on the ground.

Still another object is to provide a device also capable of performing a levelling of the ground when the same has been damaged and sods have been raised.

This aim, as well as these and other objects which will become apparent hereinafter, are achieved by a lawn-mower device comprising a framework having means for a connection to a three-point coupling of a tractor and characterized in that it comprises a first brush-like roller, a second roller and third smooth roller mounted on said framework parallel to each other, said first roller being driven to rotate in the direction of the forward motion of said tractor, said second roller being fitted with blades and being driven to rotate in a direction opposite to said forward motion of said tractor, said third roller being in contact with the ground and being adapted to level said ground, means being provided to independently adjust the height of said second roller and of said first roller relatively to said ground, transmission means being provided to drive said first and second rollers.

Further characteristics and advantages of the invention will become apparent from the detailed description of a preferred embodiment, given only by was of non-limitative example and illustrated in the accompanying drawings, wherein:

Fig. 1 is a schematic lateral cut-away view of the device connected to a tractor;

Fig. 2 is a perspective view of the first and second rollers of the device.

With reference to the above described figures, the device comprises a framework 1 provided with an upper coupling point 2 and with two lower coupling points 3 adapted to be associated with a three-point coupling 4 of a tractor 5.

In its lower portion, the framework 1 supports three rollers; a first roller 6, in the shape of a brush, is mounted on a supporting slider 7 which is movable by means of a screw adjustment 8 allowing to adjust its height. The screw adjustment 8 is of a per-se known type and it is schematically illustrated in the drawings.

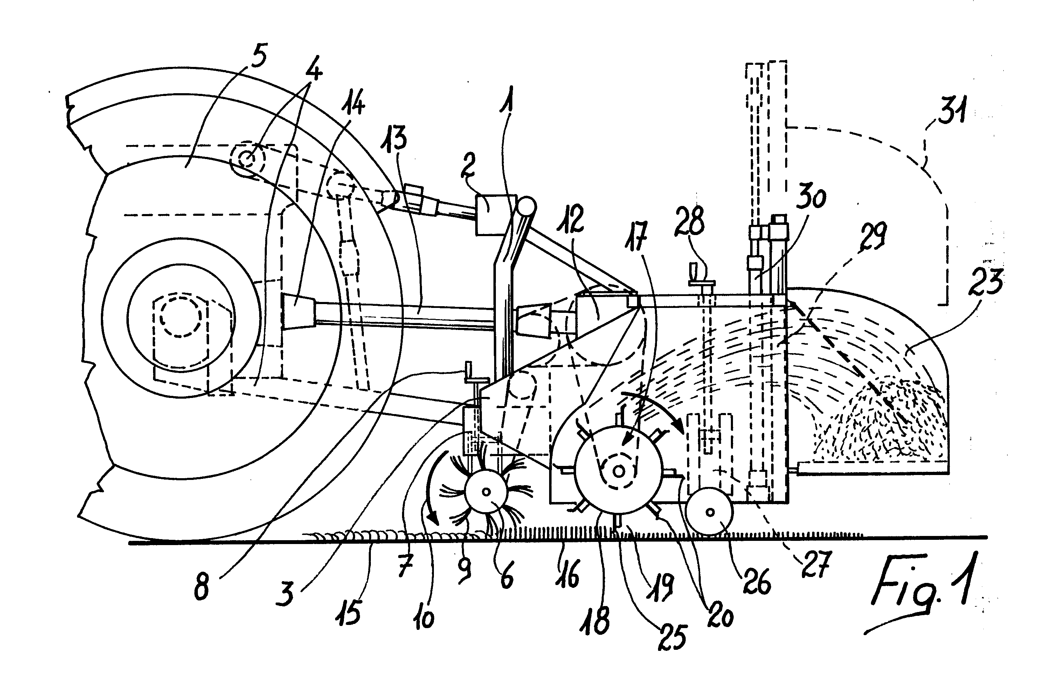

Said first brush-like roller 6 is provided on its surface with a plurality of helical rows of brushes 9, and it is driven to rotate in the direction indicated by the arrow 10, that is to say in the same direction as the advancement of the tractor 5 (towards the left in fig. 1).

The first roller 6 is rotated by a transmission 11 driven by a gearbox 12 connected to the tractor power take-off by means of a universal joint 13.

The rotation of the brush-like roller 6 allows to act on the grass 15 even if it is crushed and has its blades bent along the ground either due to the passage of the wheels of the tractor or due to previous crushings; the brush-like roller 6 raises the blades of grass and arranges them vertically like the ones indicated by the numeral 16.

A second roller 17 is provided on the framework 1 downstream with respect to said first brush-like roller 6 and consists of a drum 18 having a greater diameter, on the outer surface whereof being provided a plurality of supports substantially composed of metallic tabs 19 whereon blades 20 are fixed by means of screws.

The blades 20 are preferably arranged along helical lines 21 which start from the outer edge of the drum 18 to converge towards the center.

The blades 20 of each helical line are offset with respect to one another so that each point on the ground along the ideal generatrix of the drum 18, is affected by the passage of at least one blade.

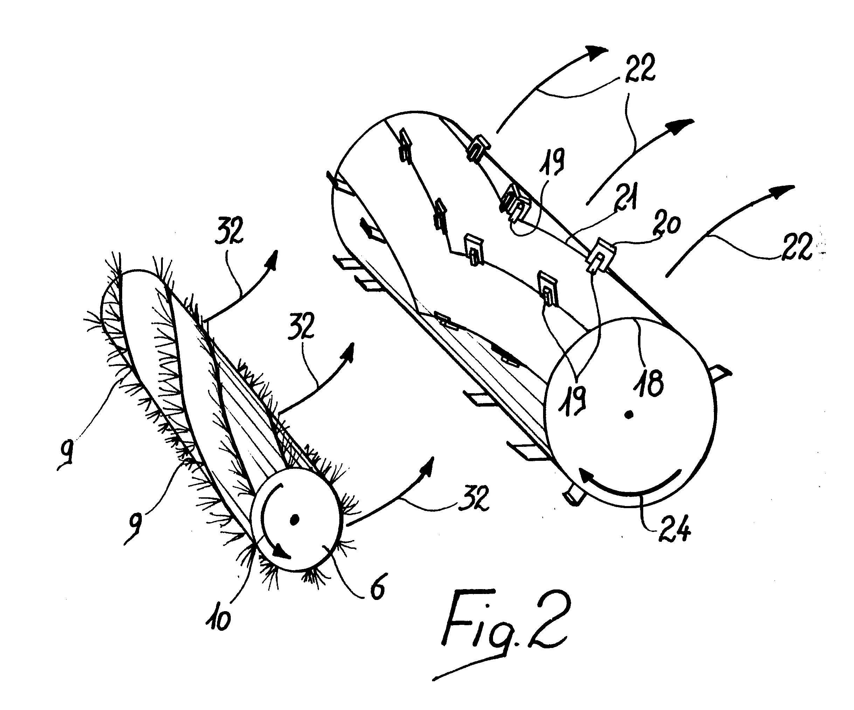

Being the blades 20 arranged along helical lines 21, the rotation of the drum 18 creates a flow of air converging towards the center and which blows the cut grass into a collecting box 23 located on the rear of the device, as indicated by the arrows 22 of fig. 2.

It should be noticed that said second roller 17 rotates in the direction of the arrow 24 of fig. 2, that is to say, it rotates in the opposite direction with respect to the advancement of the tractor and therefore of the device on the ground.

The blades 20 have at least a portion 25 forwardly angled relatively to a radial direction of the drum 18. This inclination allows the blade 20 to strike the vertically arranged grass 16 not with its entire face but only with its cutting edge.

The inclination of the blade 20 must be selected correctly, since if it is excessive it tends to jam grass between the blade 20 and the drum 18, reducing the cutting efficiency.

Downstream with respect to said second roller 17, a third smooth cylindrical roller 26 is mounted on a slider 27, the vertical adjustment whereof is allowed by a per-se known screw device 28.

This third roller 26 acts as a ground support element and is kept well pressed onto the ground by acting on the three-point coupling of the tractor.

This third roller is not intended primarily to support the device, even if its positioning determines the grass cutting height, but to level the ground pressing it, particularly if it has any raised sods.

The collecting box 23 is conveniently mounted on a vertical slider 29 which allows its lifting by means of a lifter 30 for directly dumping the grass on a truck after opening the cover 31.

The first brush-like roller 6 of the device thus conceived straightens the blades of grass which are bent towards the ground, arranging them all vertically, including those pressed by the wheels of the tractor.

The brushing action caused by said roller also allows to lift dirt present on the ground, such as the grass remained on the ground for example due to previous mowings.

Dirt is sucked in the direction of the arrows 32 towards the subsequent blade-fitted roller which also causes a suction towards the rear recovery box.

This complete cleaning action is very important since it prevents any grass which has been cut and left on the ground from fermenting, damaging the newly growing grass.

The blades 20 of the second roller 17 are tightly screwed to their supports so as to allow a high speed rotation of the drum 18, with a consequent very precise and regular cutting of the grass.

For a better cutting action the tangential speed of the second roller blades is greater than the speed of the tractor, relatively to the ground; also the tangential speed of the first roller is greater than the speed of the tractor and of the device moving on the field.

The rear third roller 26 has the function of compacting the ground, levelling any depression or rise such as the footprints left during the use of the field.

From what has been described and illustrated, it is thus apparent that all the intended aims have been achieved and that a device has been provided which allows to execute perfect mowings of grass lawns.

Naturally, starting from the same inventive concept, the device may be susceptible to modifications and variations, all whereof are in any case within the scope of the protection of the present patent.

## Claims

1. Lawn-mower device comprising a framework (1) having means (2,3) for a connection to a three-point coupling (4) of a tractor (5) and characterized in that it comprises a first brush-like roller (6), a second roller (17) and a third smooth roller (26) mounted on said framework (1) parallel to each other, said first roller (6) being driven to rotate in the direction of the forward motion of said tractor (5), said second roller (17) being fitted with blades (20) and being driven to rotate in a direction opposite to said forward motion of said tractor (5), said third roller (26) being in contact with the ground and being adapted to level said ground, means (8,28) being provided to independently adjust the height of said second roller (17) and of said first roller (6) relatively to said ground, tansmission means (11,12) being provided to drive said first (6) and second (17) rollers.

2. Device according to claim 1, characterized in that said first roller (6) has a cylindrical surface provided with a plurality of helical rows of brushes (9), said first roller (6) being mounted on a slider rigidly associated with said framework (1), said slider (7) allowing, by means of a screw control (8), the adjustment in height of said roller (6).

3. Device according to claim 1, characterized in that said first roller (6) has a tangential speed which is greater than the speed of advancement of the tractor (5).

4. Device according to claim 1, characterized in that said second roller (17) comprises a metallic drum (18), on the surface of said drum (18) there being provided a plurality of blades (20) rigidly associated with tabs (19) rigidly coupled to said surface of said drum (18).

5. Device according to claim 4, characterized in that said blades (20) have at least a portion (25) forwardly angled relatively to a radial direction of said drum (18).

6. Device according to claim 1, characterized in that said second roller (17) comprises said blades (20) arranged along helical lines (21) which start from the outer edges and converge in the center of a drum (18).

7. Device according to claim 1, characterized in that said second roller (17) is provided with said blades (20) arranged spaced and offset on each line so that at least one blade for each point on an ideal generatrix of said second roller (17) passes at each turn.

8. Device according to claim 1, characterized in that the speed of rotation of said second roller (17) is such that the tangential speed of said blades (20) is greater than the translational speed of said device relatively to the ground.

9. Device according to claim 1, characterized in that said third smooth roller (26) is constantly in contact with the ground, being mounted on a slider (27) rigidly associated with said framework (1), said slider (27) being vertically adjustable, the vertical position of said roller (26) determining the cutting height of the grass.

Fig. 1

0 267 512

Fig. 2

## DOCUMENTS CONSIDERED TO BE RELEVANT

EP 87116077.6

| Category | Citation of document with indication, where appropriate, of relevant passages | Relevant to claim | CLASSIFICATION OF THE APPLICATION (Int. Cl.4) |
|---|---|---|---|
| A | US - A - 3 205 643 (DUNHAM)<br>* Fig. 1; column 2, lines 2-14 *<br>-- | 1,3,9 | A 01 D 34/43<br>A 01 D 34/50<br>A 01 D 34/42 |
| A | US - A - 3 524 309 (BARTLETT)<br>* Fig. 1 *<br>-- | 1 | |
| A | US - A - 3 946 543 (TEMPLETON)<br>* Fig. 1,3,5 *<br>-- | 1 | |
| A | US - A - 4 021 996 (BARTLETT et al.)<br>* Fig. 3-5 *<br>-- | 1,2,9 | |
| A | US - A - 3 673 773 (FERGUSON)<br>* Fig. 5,8,9 *<br>-- | 1,4,8 | **TECHNICAL FIELDS SEARCHED (Int. Cl.4)** |
| A | GB - A - 1 471 210 (LEHARA)<br>* Fig. 1,4 *<br>-- | 1,4,6,9 | A 01 D 34/00<br>A 01 B 29/00 |
| A | US - A - 3 828 533 (FINNERAN)<br>* Fig. 5,6 *<br>---- | 1,3 | |

The present search report has been drawn up for all claims

| Place of search | Date of completion of the search | Examiner |
|---|---|---|
| VIENNA | 13-01-1988 | HAVLIK |